## Europäisches Patentamt

## European Patent Office

## Office européen des brevets

(11) Veröffentlichungsnummer : **0 138 047**
**B1**

(12) **EUROPÄISCHE PATENTSCHRIFT**

(45) Veröffentlichungstag der Patentschrift :
25.05.88

(21) Anmeldenummer : 84110762.6

(22) Anmeldetag : 10.09.84

(51) Int. Cl.⁴ : **C 08 G 63/64, C 08 G 63/24**

(54) **Phasengrenzflächenverfahren zur Herstellung voll-aromatischer Polyestercarbonate.**

(30) Priorität : 20.09.83 DE 3333863

(43) Veröffentlichungstag der Anmeldung :
24.04.85 Patentblatt 85/17

(45) Bekanntmachung des Hinweises auf die Patenterteilung : 25.05.88 Patentblatt 88/21

(84) Benannte Vertragsstaaten :
**DE FR GB IT NL**

(56) Entgegenhaltungen :
**US-A- 3 220 976**
**US-A- 3 269 985**
**US-A- 3 312 660**
**POLYMER PREP., Band 5, Nr. 263, 1964, Seiten 233-
238; E.P. GOLDBERG et al.: "Aromatic carbonatecarboxylate copolymers by a novel solution polyesterification"**

(73) Patentinhaber : BAYER AG
Konzernverwaltung RP Patentabteilung
D-5090 Leverkusen 1 Bayerwerk (DE)

(72) Erfinder : Tacke, Peter, Dr.
Brandenburger Strasse 12
D-4150 Krefeld 12 (DE)

Jouve, 18, rue St-Denis, 75001 Paris, France

## Beschreibung

Die Erfindung betrifft ein Phasengrenzverfahren zur Herstellung voll-aromatischer Polyestercarbonate, wonach Bischlorkohlensäureester von Diphenolen mit Alkalisalzen aromatischer Dicarbonsäuren umgesetzt werden.

Aromatische Polyestercarbonate sind bekannt. Sie vereinigen in sich die vorteilhaften Eigenschaften aromatischer Polyester und aromatischer Polycarbonate. Für die Herstellung aromatischer Polyestercarbonate stehen verschiedene Verfahren zur Verfügung :

Das Schmelzumesterungsverfahren der DE-AS 2 704 315 ist mit dem Nachteil verbunden, daß die entstehenden Produkte nicht farblos sind.

Die DE-OS 2 758 030 betrifft die Herstellung aromatischer Polyestercarbonate durch Umsetzung von Phosgen mit aromatischen Dicarbonsäuren und Bisphenolen nach dem Phasengrenzflächenverfahren in Gegenwart eines tertiären Amins und einer anorganischen Base. Eigene Untersuchungen haben jedoch ergeben, daß unter den angegebenen Bedingungen ein großer Teil der eingesetzten Dicarbonsäure nicht reagiert. Das Verfahren ist daher unwirtschaftlich.

Die europäische veröffentlichte Patentanmeldung 10 840 betrifft ein Phasengrenzflächenverfahren bzw. ein Lösungsverfahren zur Herstellung von Polyestercarbonaten. Die erforderlichen Säuredichloride stellen jedoch sehr kostspielige Ausgangsstoffe dar.

Die US-PS 3 220 976 lehrt die Umsetzung von Bischlorkohlensäureestern von Diphenolen mit aromatischen Dicarbonsäuren in tertiären Aminen als Lösungsmittel und Säureakzeptoren. Dieses Verfahren ist jedoch umständlich, und die quantitative Abtrennung der tertiären Amine ist schwierig.

Die US-PS 4 130 548 betrifft ein Phasengrenzflächenverfahren zur Herstellung aromatischer Polyestercarbonate : In der ersten Stufe wird der Bischlorkohlensäureester eines Bisphenols mit annähernd äquimolaren Mengen von Alkalisalzen aromatischer Dicarbonsäuren bei einem pH-Wert von 5,5-8,0 und einer Temperatur von — 10 bis + 60 °C zum Polyesteranhydrid umgesetzt ; in der zweiten Stufe erfolgt die Reaktion dieses Polyesteranhydrids mit mindestens einer molar äquivalenten Menge Bisphenol, und in der dritten Stufe wird der Überschuß Bisphenol mit dem Produkt der zweiten Stufe bei einem pH-Wert von 9,0-11,5 und einer Temperatur von 10 bis 50 °C zum Polyestercarbonat polykondensiert. Wird in der zweiten Stufe nicht mit einem Bisphenol-Überschuß gearbeitet, so entfällt zwar offensichtlich die dritte Stufe ; die Zeit bis zum Ende der Reaktion verlängert sich aber beträchtlich. Ein dreistufiges Verfahren ist aber umständlich und erfordert höheren Aufwand. Demgegenüber wurde überraschenderweise gefunden, daß aromatische Polyestercarbonate wesentlich einfacher und schneller zugänglich sind, wenn überschüssiger Bisphenolbischlorkohlensäureester mit Salzen aromatischer Dicarbonsäuren bei einem pH-Wert von 6 bis 8,5, vorzugsweise bei erhöhter Temperatur, zur Reaktion gebracht und eine Nachreaktion bei einem pH-Wert von 9 bis 14 angeschlossen wird. Während der Nachreaktion können gegebenenfalls weitere Bischlorkohlensäureester, Kettenabbrecher und Verzweiger zugesetzt werden. Bei dieser Verfahrensweise kann die gesamte eingesetzte Dicarbonsäure umgesetzt werden.

Gegenstand der Erfindung ist ein Verfahren zur Herstellung aromatischer Polyestercarbonate nach dem Phasengrenzflächenverfahren, in dem man in einer ersten Stufe mindestens ein Alkalisalz einer aromatischen Dicarbonsäure mit einem Überschuß von 11 bis 300, vorzugsweise von 15 bis 30, Mol-% Bischlorkohlensäureester mindestens eines Diphenols bei einer Temperatur von 25 bis 100, vorzugsweise von 35 bis 55 °C und bei einem pH-Wert von 6 bis 8,5, vorzugsweise von 7 bis 8,5, umsetzt und in einer zweiten Stufe die Reaktionsmischung bei einer Temperatur von 10 bis 60, vorzugsweise von 20 bis 40, °C, gegebenenfalls unter Zusatz von Kettenabbrechern, Verzweigungsmitteln und/oder weiterem Bischlorkohlensäureester, bei einem pH-Wert von 9 bis 14 polykondensiert.

Bevorzugte aromatische Dicarbonsäuren sind Iso- und Terephthalsäure. Nach einer bevorzugten Ausführungsform werden sie im Verhältnis 7 : 3 bis 3 : 7 eingesetzt. Bevorzugte Alkalisalze sind die Kalium- und insbesondere die Natriumsalze.

Bischlorkohlensäureester von Bisphenolen sind bekannt. Ihre Herstellung kann beispielsweise gemäß DE-OS 2 410 668 oder 2 410 743 erfolgen.

Bevorzugte Diphenole sind z. B. solche, wie sie in der DE-OS 3 007 934 beschrieben sind. Besonders bevorzugte Diphenole sind Bisphenol-A, Tetramethylbisphenol-A, 1,1-Bis-(4-hydroxyphenyl)-isobutan und -cyclohexan, 4,4'-Dihydroxydiphenylsulfid und -sulfon sowie deren di- und tetrahalogenierten Derivate.

Bevorzugte Verzweigungsmittel sind ebenfalls in der DE-OS 3 007 934 beschrieben.

Bevorzugte Kettenabbrecher zur Begrenzung des Molekulargewichts sind aliphatische und aromatische Monocarbonsäuren sowie Monophenole, Chlorkohlensäureester von Monophenolen und Säurechloride aromatischer Monocarbonsäuren. Die aromatischen Ringe der Kettenabbrecher können bis zu 2 verzweigte und/oder unverzweigte Alkylsubstituenten mit je 1-18 C-Atomen tragen. Die Kettenabbrecher können in Mengen von 1 bis 10, vorzugsweise von 2 bis 6, Mol-%, bezogen auf eingesetzten Bischlorkohlensäureester, eingesetzt werden.

Das Phasengrenzflächenverfahren kann z. B. so durchgeführt werden, wie es in der DE-OS 3 007 934 beschrieben ist. Das Verfahren kann sowohl kontinuierlich als auch diskontinuierlich durchgeführt werden. Tertiäre Amine und quartäre Ammoniumsalze wirken als Katalysatoren.

Die nach dem erfindungsgemäßen Verfahren hergestellten Polyestercarbonate können bis zu 0,5 Mol-%, bezogen auf die Summe von Ester- und Carbonatgruppen, Anhydridgruppen enthalten.

Der Gehalt an Carbonatgruppen ist im wesentlichen durch das Verhältnis aromatische Dicarbonsäuren/Bischlorkohlensäureester vorgegeben und liegt in der Regel bei 10 bis 80 Mol-%, bezogen auf die Summe von Ester- und Carbonatgruppen.

Die nach dem erfindungsgemäßen Verfahren hergestellten Polyestercarbonate können, gegebenenfalls nach Zusatz von Stabilisatoren, Fließmitteln, Weichmachern, Entformungsmitteln, Füll- und Verstärkungsstoffen, wie z. B. Glasfasern, Glaskugeln, Asbest- und Kohlenstoffasern, Kieselgur, Kaolin, Gesteinsmehl und Pigmenten, nach üblichen Verfahren in Spritzgießmaschinen zu Formkörpern oder in Extrudern zu Halbzeug verarbeitet werden. Außerdem eignen sich die erfindungsgemäß hergestellten Polyestercarbonate für Legierungen mit anderen Polykondensaten, Polymerisaten und Polyadditionsverbindungen.

Beispiele

Beispiel 1

In einen Dreihalskolben mit Rührer, Tropftrichter und Rückflußkühler wurde eine Lösung aus
je 16,6 g (0,1 Mol) Iso- und Terephthalsäure,
8,4 g Natriumhydrogencarbonat,
15,2 g (0,38 Mol) Natriumhydroxid,
1 ml N-Ethyl-piperidin in
2 l Wasser geben und eine Lösung von
85 g (0,24 Mol) Bisphenol-A-bischlorkohlensäureester in
1,2 l Dichlormethan zugesetzt.

Unter heftigem Rühren wurde schnell auf 40 °C erwärmt und der pH-Wert der wäßrigen Phase durch Zugabe von 10 gew.-%iger Natronlauge bei 7,6 bis 8,3 gehalten.

Nach ca. 50 Minuten waren die aromatischen Dicarbonsäuren vollständig umgesetzt.

Nach dem Abkühlen auf ca. 20-25 °C wurden 7 g (ca. 0,02 Mol) Bisphenol-A-bischlorkohlensäureester und 1,1 g (ca. 7 mMol) tert.-Butylphenol zugegeben und bei einem pH-Wert von ca. 13 noch 30 Minuten nachgerührt.

Die Phasen wurden getrennt, die organische Phase gewaschen und anschließend stark eingeengt. Aus der konzentrierten Lösung wurde eine Gießfolie hergestellt und diese bei 100 °C im Vakuum (ca. 10 mbar) von restlichem Dichlormethan befreit.

Das erhaltene, völlig farblose Polyestercarbonat (ca. 77 Mol-% Carbonester-Anteil) besaß eine relative Viskosität (gemessen an einer Lösung von 0,25 g Produkt in 50 ml Dichlormethan-Lösung bei 25 °C) von 1,261.

Der Gehalt von Carbonsäureanhydrid betrug 0,273 Mol-% (bezogen auf die Summe von Ester- und Carbonatgruppen).

Beispiel 2

Analog Beispiel 1 wurden
21,6 g (0,13 Mol) Isophthalsäure,
6 g Natriumhydrogencarbonat,
9,6 g (0,24 Mol) Natriumhydroxid und
1 ml Triethylamin in
2 l Wasser gelöst und eine Lösung von
85 g (0,24 Mol) Bisphenol-A-bischlorkohlensäureester in
1,2 l Dichlormethan zugegeben.
Weiter wurde wie in Beispiel 1 verfahren.

Das erhaltene, völlig farblose Produkt besaß eine relative Viskosität von 1,258 (gemessen wie in Beispiel 1). Der Carbonsäureanhydrid-Gehalt betrug 0,238 Mol-%.

Beispiel 3

Analog Beispiel 1 wurden
12 g (0,072 Mol) Terephthalsäure,
5 g Natriumhydrogencarbonat,
5,6 g (0,14 Mol) Natriumhydroxid und
0,5 g Tetrabutylammoniumchlorid in
2 l Wasser gelöst und eine Lösung von
85 g (0,24 Mol) Bisphenol-A-bischlorkohlensäureester in 1,2 l Dichlormethan zugegeben.

Weiter wurde wie in Beispiel 1 verfahren, jedoch kein weiterer Bisphenolchlorkohlensäureester mehr eingesetzt.

Das völlig farblose Produkt zeigte eine relative Viskosität von 1,246.

Der Carbonsäureanhydrid-Gehalt betrug 0,182 Mol-%.

**Patentansprüche**

1. Verfahren zur Herstellung aromatischer Polyestercarbonate nach dem Phasengrenzflächenverfahren, in dem man in einer ersten Stufe mindestens ein Alkalisalz einer aromatischen Dicarbonsäure mit einem Überschuß von 11 bis 300 Mol-% Bischlorkohlensäureester mindestens eines Diphenols bei einer Temperatur von 25 bis 100 °C und bei einem pH-Wert von 6 bis 8,5 umsetzt und in einer zweiten Stufe die Reaktionsmischung bei einer Temperatur von 10 bis 60 °C, gegebenenfalls unter Zusatz von Kettenabbrechern, Verzweigungsmitteln und/oder weiterem Bischlorkohlensäureester, bei einem pH-Wert von 9 bis 14 polykondensiert.

2. Verfahren nach Anspruch 1, in dem man in der ersten Stufe einen Überschuß von 15 bis 30 Mol-% Bischlorkohlensäureester einsetzt.

3. Verfahren nach Ansprüchen 1 und 2, in dem man in der ersten Stufe bei einer Temperatur von 35 bis 55 °C arbeitet.

4. Verfahren nach Ansprüchen 1 bis 3, in dem man in der ersten Stufe bei einem pH-Wert von 7 bis 8,5 arbeitet.

5. Verfahren nach Ansprüchen 1 bis 4, in dem man in der zweiten Stufe bei einer Temperatur von 20 bis 40 °C arbeitet.

**Claims**

1. Process for the preparation of aromatic polyester carbonates by the phase interface process, wherein at least one alkali metal salt of an aromatic dicarboxylic acid is reacted in a first stage with an excess of from 11 to 300 mol% of bischlorocarbonic acid esters of at least one diphenol at a temperature of from 25 °C to 100 °C and at a pH of from 6 to 8.5 and the reaction mixture is polycondensed in a second stage at a temperature of from 10 °C to 60 °C, optionally with the addition of chain breaking agents, branching agents and/ or a further bischlorocarbonic acid ester at a pH of from 9 to 14.

2. Process according to Claim 1, wherein an excess of from 15 to 30 mol% of bischlorocarbonic acid ester is used in the first stage.

3. Process according to Claims 1 and 2, wherein a temperature of from 35 °C to 55 °C is employed in the first stage.

4. Process according to Claims 1 to 3, wherein a pH of from 7 to 8.5 is employed in the first stage.

5. Process according to Claims 1 to 4, wherein a temperature of from 20 °C to 40 °C is employed in the second stage.

**Revendications**

1. Procédé de préparation de polyestercarbonates aromatiques selon le procédé interfacial, dans lequel on fait réagir, dans une première étape, au moins un sel alcalin d'un acide dicarboxylique aromatique avec un excès de 11 à 300 % molaire d'un ester bischlorocarbonique d'au moins un diphénol à une température de 25 à 100 °C et à un pH de 6 à 8,5 et on polycondense, dans une deuxième étape, le mélange réactionnel à une température de 10 à 60 °C, éventuellement avec addition d'agents de rupture de chaîne, d'agents de ramification et/ou d'un autre ester bischlorocarbonique, à un pH de 9 à 14.

2. Procédé selon la revendication 1, dans lequel on utilise, dans la première étape, un excès de 15 à 30% molaire d'ester bischlorocarbonique.

3. Procédé selon les revendications 1 et 2, dans lequel on opère à une température de 35 à 55 °C dans la première étape.

4. Procédé selon les revendications 1 à 3, dans lequel on opère à un pH de 7 à 8,5 dans la première étape.

5. Procédé selon les revendications 1 à 4, dans lequel on opère dans la deuxième étape à une température de 20 à 40 °C.